# FASCICULE DE BREVET EUROPEEN

(11) **EP 2 006 555 B1**
(45) Date de publication et mention de la délivrance du brevet: **20.02.2013**
(21) Numéro de dépôt: 08356089.6
(22) Date de dépôt: 17.06.2008
(51) Int. Cl.: F16C 3/02

(54) **Arbre de transmission de mouvements et/ou d'efforts en rotation**
Welle zur Übertragung von Bewegungen und/oder Drehkräften
Shaft for transmitting movement and/or rotation forces

(30) Priorité: 18.06.2007 FR 0704322
(43) Date de publication de la demande: 24.12.2008
(73) Titulaire: SKF Aerospace France, 26240 Saint-Vallier-sur-Rhône (FR)
(72) Inventeur: Genot, Michel, 39140 Relans (FR); Buchin, Jean-Michel, 39000 Lons le Saunier (FR)
(74) Mandataire: Grand, Guillaume

(56) Documents cités:
- DE-A1- 4 319 817
- US-A- 2 197 883
- US-A- 4 838 833

## Description

La présente invention concerne un arbre de transmission de mouvements et/ou d'efforts en rotation, également appelé de manière courante « arbre de torsion ».

Un exemple d'un tel arbre est fourni par US-A-4 838 833 sur lequel est basé le préambule de la revendication 1.

L'invention s'intéresse spécifiquement aux arbres dits «en composite », c'est-à-dire aux arbres dont le corps principal est constitué d'un tube en un matériau composite à matrice en matière plastique, autrement dit en un matériau composé d'une résine thermoplastique ou thermodurcissable et d'un renfort de tenue mécanique, notamment fibreux.

Ce type d'arbre est utilisé, notamment dans le domaine aéronautique, pour porter divers ensembles mécaniques fonctionnels, en particulier des mécanismes, actionnés ou sollicités lors de l'entraînement en rotation de l'arbre sur lui-même. Ainsi, ce type d'arbre est utilisé pour déployer des volets de bord d'attaque et de bord de fuite d'ailes d'avion, afin d'en augmenter la portance, ou pour orienter des loquets de portes d'avion, afin de permettre l'ouverture et la fermeture de ces portes. Dans le domaine automobile, ce type d'arbre peut être utilisé comme colonne de direction.

En pratique, pour éviter de dégrader le tube en matériau composite, les mécanismes précités ne sont pas directement supportés par le tube, mais par des inserts tubulaires métalliques, qui sont agencés fixement autour du tube et qui assurent une bonne liaison mécanique entre le tube et les mécanismes. Cependant, lors de la torsion de l'arbre et donc de la transmission d'efforts par l'insert entre le tube et les mécanismes, la zone d'interface, de section circulaire, entre chaque insert et le tube subit de fortes contraintes en cisaillement, qui, en particulier à la longue, sont susceptibles de provoquer la ruine de la résine plastique entourée par l'insert. Autrement dit, les performances des arbres actuellement disponibles, en termes de résistance à la rupture en torsion, sont limitées.

Le but de la présente invention est de proposer un arbre de transmission à tube en matériau composite, dont les performances mécaniques en torsion sont significativement améliorées.

A cet effet, l'invention a pour objet un arbre de transmission de mouvements et/ou d'efforts en rotation, tel que défini à la revendication 1.

L'idée à la base de l'invention est d'éviter que l'interface de contact entre la face intérieure de l'insert et la face extérieure du tube en composite présente une section rigoureusement circulaire, au profit d'une section non circulaire. En effet, grâce à cette disposition, la transmission des efforts entre le tube et l'insert, lors de la sollicitation en torsion de l'arbre, n'induit pas exclusivement des contraintes de cisaillement au niveau de cette interface, car les contraintes sont découplées en, d'une part, des contraintes de cisaillement et, d'autre part, des contraintes de matage. De la sorte, par rapport à un insert de section intérieure rigoureusement circulaire, les contraintes en cisaillement subies au niveau de l'interface entre l'insert et le tube sont significativement moindres, pour une sollicitation en torsion donnée de l'arbre. Au niveau des parties non circulaires du ou de chaque profil intérieur de l'insert, l'effort transmis entre le tube et l'insert n'est alors pas rigoureusement orthoradial à l'axe longitudinal central de l'arbre, mais présente, en coupe transversale de l'arbre, une composante radiale non nulle. De cette façon, au niveau des parties non circulaires précitées, le tube et l'insert sont radialement pressés l'un contre l'autre, liant alors mécaniquement ces deux composants l'un à l'autre par un effet de coin. Ainsi, l'invention repose sur la coopération mécanique entre la face intérieure de l'insert, à profil(s) non circulaire(s) en coupe transversale, et la face extérieure complémentaire de la partie du tube entourée par cet insert, étant entendu que l'invention n'est pas limitée par la forme géométrique précise du profil intérieur de l'insert, ni par les matières qui composent l'insert métallique et le tube composite, ni par le procédé de fabrication de l'arbre.

Des caractéristiques particulières avantageuses de l'arbre conforme à l'invention, prises isolément ou selon toutes les combinaisons techniquement possibles sont énoncées aux revendications dépendantes 2 à 10.

L'invention sera mieux comprise à la lecture de la description qui va suivre, donnée uniquement à titre d'exemple et faite en se référant aux dessins sur lesquels :
- la figure 1 est une vue schématique en élévation d'un arbre conforme à l'invention ;
- la figure 2 est une vue en perspective d'une coupe longitudinale d'une partie de l'arbre de la figure 1 ;
- la figure 3 est une coupe transversale de l'arbre, selon le plan III indiqué à la figure 2 ;
- les figures 4 à 6 sont des vues analogues à la figure 3, illustrant des variantes de réalisation d'arbres conformes à l'invention;
- la figure 7 est une vue en perspective d'une coupe longitudinale d'un insert appartenant à une autre variante de réalisation conforme à l'invention ; et
- la figure 8 est une coupe transversale selon le plan VIII de la figure 7.

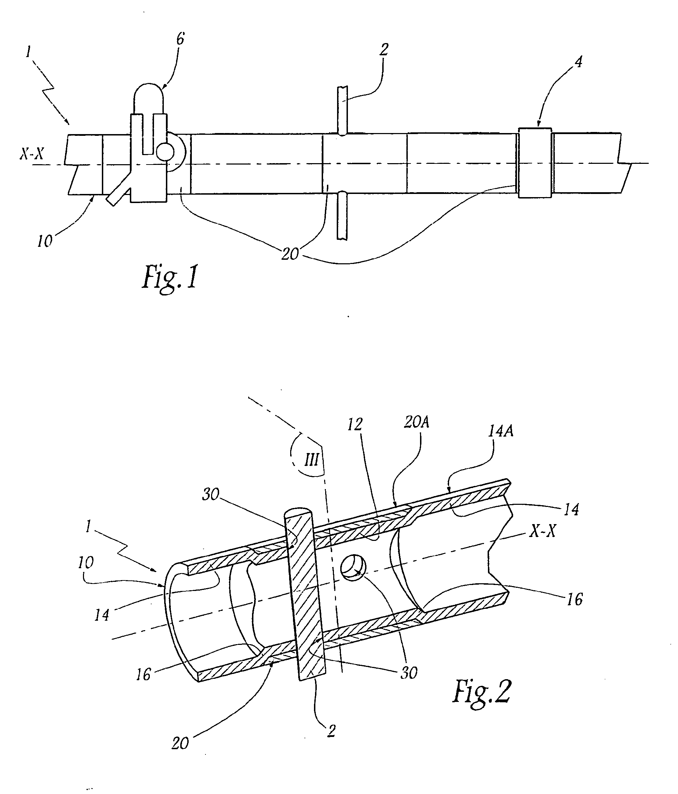

Sur la figure 1 est représenté un arbre 1 s'étendant globalement autour d'un axe géométrique longitudinal central X-X. Cet arbre est destiné à être sollicité en rotation sur lui-même, autour de son axe X-X, afin de transmettre des mouvements et/ou des efforts rotatifs centrés sur l'axe X-X, entre par exemple une pièce de structure non représentée, agencée en particulier à l'une des extrémités longitudinales de l'arbre, et différents ensembles mécaniques fonctionnels, portés par l'arbre. Dans l'exemple illustré à la figure 1, trois ensembles de ce type sont représentés, à savoir, un axe physique 2, sous forme d'une tige pleine traversant diamétralement de part en part l'arbre 1, et deux mécanismes 4 et 6, correspondant respectivement à un roulement et à un loquet d'ouverture/fermeture d'une porte non représentée. D'autres ensembles, notamment d'autres mécanismes que ceux illustrés à la figure 1, peuvent être reçus sur l'arbre 1, en particulier des ensembles intégrant plusieurs pièces métalliques qui présentent des structures plus ou moins complexes et ayant toutes en commun la caractéristique d'être actionnées et/ou sollicitées lorsque l'arbre 1 est entraîné en rotation sur lui-même.

L'arbre 1 comporte un corps principal sous forme d'un tube creux 10, globalement cylindrique et centré sur l'axe X-X. Ce tube est réalisé en un matériau composite, constitué d'une matrice en une matière plastique, notamment en une résine thermoplastique ou thermodurcissable, renforcée à des fins de tenue mécanique, typiquement par des fibres.

Les ensembles 2, 4 et 6 sont supportés par le tube 10, avec interposition d'inserts métalliques respectifs 20. Chacun de ces inserts est agencé fixement autour d'une partie longitudinale 12 du tube 10, afin de lier mécaniquement cette partie et l'ensemble correspondant.

Sur la figure 2 sont représentés plus en détail l'insert 20 et la partie 12 du tube 10 associée à l'axe 2. Comme bien visible sur cette figure, cet insert et cette partie de tube sont radialement traversés de part en part par plusieurs orifices 30, notamment par deux orifices diamétralement opposés par rapport à l'axe X-X et destinés à recevoir de façon complémentaire la tige constituant l'axe 2, de manière à lier en rotation cet axe, cet insert et cette partie de tube. En pratique, la présence et l'agencement d'orifices traversants, tels que les orifices 30 illustrés à la figure 2, sont variables, dans le sens où la présence et la position de ces orifices dépendent directement de la nature de l'ensemble mécanique supporté par l'insert considéré. Par exemple, l'insert supportant le roulement 4 et la partie de tube correspondante peuvent être dépourvus d'orifices traversants lorsque la bague intérieure de ce roulement est emmanchée en force autour de l'insert pour être liée mécaniquement à ce dernier.

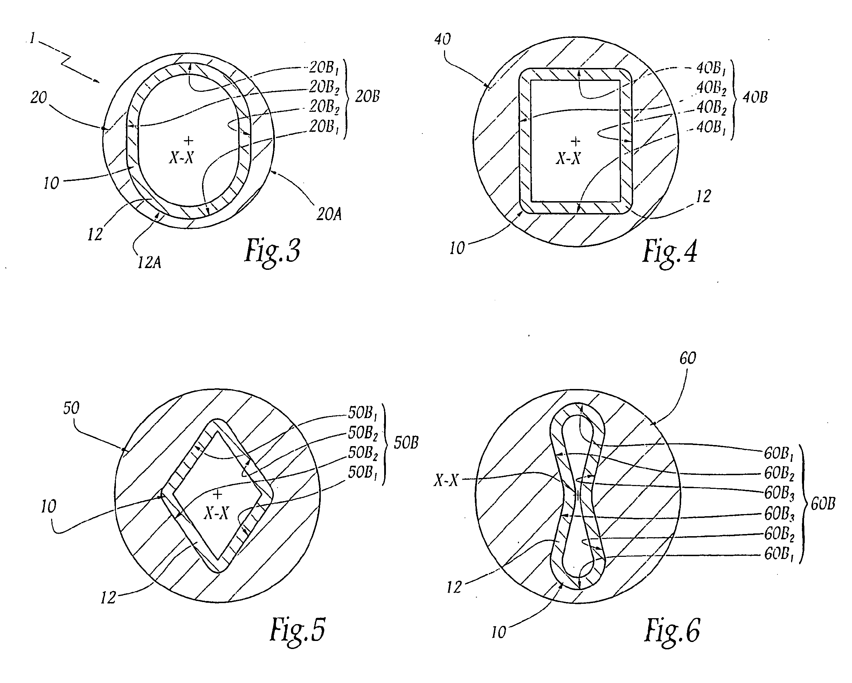

Avantageusement, comme bien visible pour l'insert 20 illustré aux figures 2 et 3, chaque insert délimite une face extérieure 20A cylindrique, à base circulaire et centrée sur l'axe X-X. Cette face 20A s'étend en affleurement de la face extérieure 14A, également cylindrique à base circulaire et centrée sur l'axe X-X, des parties 14 du tube 10 situées de part et d'autre de la partie de tube 12, suivant la longueur de ce tube. De la sorte, la présence de chaque insert n'induit aucune discontinuité de surface à l'extérieur de l'arbre 10. Pour se faire, la partie de tube 12 est disposée en retrait, vers l'intérieur, des parties 14, en étant reliée à ces dernières, à chacune de ses extrémités longitudinales, par des épaulements 16.

Comme bien visible à la figure 3, chaque insert 20 n'a pas une section intérieure rigoureusement circulaire, mais présente, en coupe transversale à l'axe X-X, un profil intérieur 20B de forme oblongue, centrée sur l'axe X-X. En terme géométrique plus précis, le profil 20B est constitué de deux portions incurvées 20B₁ diamétralement opposées, dont les parties médianes respectives s'apparentent à des arcs de cercle centrés sur l'axe X-X, et de deux segments rectilignes parallèles 20B₂ diamétralement opposés et décalés de 90° autour de l'axe X-X par rapport aux portions 20B₁. Comme la face extérieure 20A de l'insert est à base circulaire, l'épaisseur de la section transversale de l'insert est variable suivant sa périphérie, cette épaisseur étant plus petite radialement entre chaque portion 20B₁ et la face 20A, que radialement entre chaque segment 20B₂ et la face 20A.

La partie de tube 12 est ajustée de manière complémentaire à la face intérieure de l'insert 20, de sorte que sa face extérieure 12A présente, en coupe transversale, un profil oblong correspondant au profil 20B. En pratique, l'ajustement de formes entre la face intérieure de l'insert et la face extérieure de la partie de tube 12 est obtenu facilement en raison de la nature composite du tube 10, ce dernier pouvant être fabriqué dans des configurations géométriques diverses. En particulier, la partie de tube 12 est avantageusement fabriquée directement à l'intérieur de l'insert correspondant 20, à partir d'une préforme fibreuse qui est agencée à l'intérieur de l'insert et dans laquelle est injectée une matière plastique, telle qu'une résine époxy, afin de former une matrice. On comprend également que l'épaisseur de la partie de tube 12 peut aussi bien être sensiblement constante suivant sa périphérie, comme dans l'exemple représenté aux figures, qu'être variable suivant cette périphérie.

En service, l'arbre 1 est sollicité en torsion, c'est-à-dire en rotation sur lui-même autour de l'axe X-X, notamment depuis au moins l'une de ses extrémités. Il en résulte une transmission d'efforts entre le tube 10 et chaque ensemble mécanique 2, 4, 6, via partiellement, voire exclusivement, les inserts 20. Le profil intérieur oblong 20B de chaque insert permet de découpler les contraintes localisées à l'interface entre l'insert et la partie de tube 12 correspondante : au niveau des portions incurvées 20B₁, ces contraintes tendent à cisailler cette interface, par effet de torsion autour de l'axe X-X, tandis qu'au niveau des segments rectilignes 20B₂, ces contraintes tendent à comprimer ou à tirer sur cette interface, en matant radialement l'un contre l'autre l'insert et le tube. Les efforts d'entraînement en rotation sont ainsi efficacement transmis entre le tube et chaque ensemble mécanique 2, 4, 6, tout en limitant le risque de décohésion entre chaque insert 20 et les parties de tube correspondantes 12, au niveau de leur interface de contact, notamment par ruine de la résine formant la matrice de ces parties de tube 12.

Sur les figures 4 à 6 sont représentées des variantes pour l'insert 20, respectivement référencées 40, 50 et 60. Ces variantes ne se distinguent de l'insert 20 que par la forme géométrique non circulaire de leur profil intérieur 40B, 50B et 60B.

Ainsi, les profils 40B et 50B des inserts 40 et 50 présentent chacun une forme de quadrilatère centrée sur l'axe X-X, à savoir une forme de rectangle pour le profil 40B et une forme de losange pour le profil 50B. Chaque profil 40B, 50B comporte de la sorte deux paires de segments rectilignes parallèles 40B₁ et 40B₂, 508₁ et 50B₂ opposés l'un à l'autre suivant la périphérie de l'insert.

Le profil 60B de l'insert 60 présente, quant à lui, une forme à deux lobes diamétralement opposés par rapport à l'axe X-X, s'apparentant à une forme de cacahouète. Le profil 60B comporte de la sorte, à la fois, deux portions incurvées 60B₁, diamétralement opposées et appartenant respectivement à chaque lobe, deux segments rectilignes 60B₂, diamétralement opposés et appartenant chacun à un des lobes, et deux autres segments rectilignes 60B₃, diamétralement opposés et appartenant respectivement à chacun des lobes, étant remarqué que, pour chaque lobe, les segments 60B₂ et 60B₃ convergent l'un vers l'autre en direction de l'axe X-X.

Les profils 40B, 50B et 60B présentent les mêmes avantages mécaniques que le profil oblong 20B, dans le sens où, au niveau des segments rectilignes 40B₁, 40B₂, 50B₁, 50B₂, 60B₂ et 60B₃ de ces profils, des contraintes de matage sont générées entre chaque insert 40, 50, 60 et la partie de tube 12 ajustée dans cet insert.

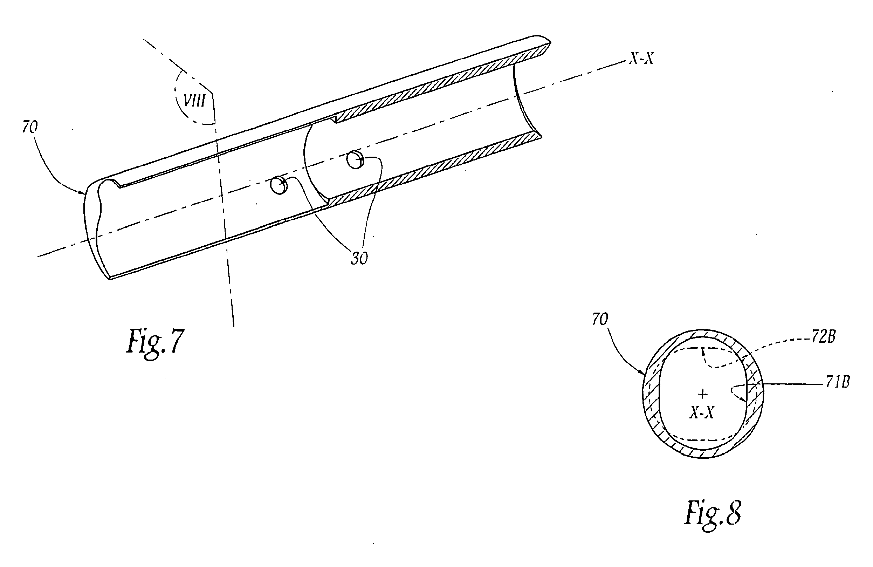

Sur la figure 7 est représentée une autre variante d'un insert 70 qui, à la différence de l'insert 20, présente, dans deux plans de coupe traversaux successifs suivant la longueur de l'insert, deux profils intérieurs 71B et 72B distincts, dans le sens où, projetés dans un même plan de coupe comme à la figure 8 sur laquelle la projection du profil 72B est représentée en pointillés, les deux profils ne coïncident pas l'un avec l'autre. Dans l'exemple représenté à la figure 7, chacun de ces profils 71 B et 72B présente une forme oblongue, analogue à la forme oblongue du profil intérieur 20B, étant entendu que les deux formes oblongues des profils 71B et 72B sont décalées l'une par rapport à l'autre autour de l'axe X-X. Avantageusement, pour des raisons liées à une meilleure tenue à la rupture en torsion, ces deux formes oblongues sont décalées l'une par rapport à l'autre de 90°, ce qui tend à uniformiser les performances mécaniques en torsion de l'insert 70 considéré dans son ensemble.

A titre de variantes, non représentées, de l'insert 70, les deux profils distincts combinés au sein d'un même insert, tels que les profils 71B et 72B, peuvent être de natures différentes, c'est-à-dire que, par exemple, un profil intérieur en forme de quadrilatère, tel que l'un des profils 40B et 50B, peut être combiné à un profil de forme multilobée, tel que le profil 60B.

## Revendications

1. Arbre (1) de transmission de mouvements et/ou d'efforts en rotation, comportant, d'une part, un tube (10) en un matériau composite à matrice en matière plastique et, d'autre part, un insert tubulaire métallique (20 ; 40 ; 50 ; 60 ; 70), agencé fixement autour d'une partie longitudinale (12) du tube et adapté pour lier mécaniquement le tube et un ensemble mécanique fonctionnel, supporté par l'insert et tel qu'un axe (2), un roulement (4), un loquet (6) ou analogue,
**caractérisé en ce que** l'insert (20 ; 40 ; 50 ; 60 ; 70) présente, en coupe transversale, au moins un profil intérieur (20B ; 40B ; 50B ; 60B ; 71 B, 72B) ayant une forme non circulaire, à laquelle la face extérieure (12A) de la partie longitudinale (12) du tube (10) est ajustée de manière sensiblement complémentaire.

2. Arbre suivant la revendication 1, **caractérisé en ce que** le ou chaque profil intérieur (20B ; 40B ; 50B ; 60B ; 71 B, 72B) de l'insert (20 ; 40 ; 50 ; 60 ; 70) inclut au moins un segment rectiligne (20B₂ ; 40B₁, 40B₂ ; 50B₁, 50B₂ ; 60B₂, 60B₃).

3. Arbre suivant la revendication 2, **caractérisé en ce que** le ou chaque profil intérieur (20B ; 40B ; 50B ; 60B ; 71 B, 72B) de l'insert (20 ; 40 ; 50 ; 60 ; 70) inclut au moins deux segments rectilignes sensiblement parallèles (20B₂ ; 40B₁, 40B₂ ; 50B₁, 50B₂ ; 60B₂, 60B₃), opposés l'un à l'autre suivant la périphérie de l'insert.

4. Arbre suivant l'une quelconque des revendications précédentes, **caractérisé en ce que** le ou chaque profil intérieur (20B ; 71 B, 72B) de l'insert (20 ; 70) a une forme oblongue.

5. Arbre suivant l'une quelconque des revendications 1 à 3, **caractérisé en ce que** le ou chaque profil intérieur (40B ; 50B) de l'insert (40 ; 50) a une forme de quadrilatère, telle qu'une forme carrée, une forme rectangulaire ou une forme de losange.

6. Arbre suivant l'une quelconque des revendications 1 à 3, **caractérisé en ce que** le ou chaque profil intérieur (60B) de l'insert (60) a une forme multilobée, telle qu'une forme de cacahouète.

7. Arbre suivant l'une quelconque des revendications précédentes, **caractérisé en ce que** l'insert (70) présente, dans des plans de coupe transversaux successifs suivant sa longueur, au moins deux profils intérieurs (71B, 72B) ayant des formes respectives non circulaires qui, projetées dans un même plan de coupe transversale, ne coïncident pas l'une avec l'autre.

8. Arbre suivant la revendication 7, **caractérisé en ce que** lesdits deux profils (71 B, 72B) sont similaires et décalés de 90° l'un par rapport à l'autre autour de l'axe géométrique longitudinal central (X-X) de l'insert (70).

9. Arbre suivant l'une quelconque des revendications précédentes, **caractérisé en ce que** la face extérieure (20A) de l'insert (20) est cylindrique à base circulaire.

10. Arbre suivant la revendication 9, **caractérisé en ce que** le tube (10) comporte, de part et d'autre, suivant sa longueur, de sa partie longitudinale (12) entourée par l'insert (20), des parties (14) ayant une face extérieure (14A) qui est cylindrique à base circulaire et qui s'étend en affleurement de la face extérieure (20A) de l'insert.

## Claims

1. A shaft (1) for transmitting rotational movements and/or forces, comprising firstly a tube (10) made of a composite material having a plastic matrix and secondly a metallic tubular insert (20 ; 40 ; 50 ; 60 ; 70) arranged fixedly around a longitudinal portion (12) of the tube and designed to link the tube mechanically to a functional mechanical assembly which is supported by the insert and is for instance a pin (2), a rolling bearing (4), a latch (6) or the like,
**Characterized in that** the insert (20 ; 40 ; 50 ; 60 ; 70) has in cross section at least one noncircular inner profile (20B ; 40B ; 50B ; 60B ; 71B, 72B), to which the outer surface (12A) of the longitudinal portion (12) of the tube (10) is adapted in a substantially complementary manner.

2. The shaft as claimed in claim 1, **characterized in that** the or each inner profile (20B ; 40B ; 50B ; 60B ; 71B, 72B) of the insert (20 ; 40 ; 50 ; 60 ; 70) includes at least one rectilinear segments (20B₂ ; 40B₁, 40B₂ ; 50B₁, 50B₂ ; 60B₂, 60B₃).

3. The shaft as claimed in claim 2, **characterized in that** the or each inner profile (20B ; 40B ; 50B ; 60B ; 71B , 72B) of the insert (20; 40 ; 50 ; 60 ; 70) includes at least two substantially parallel rectilinear segments (20B₂ ; 40B₁, 40B₂ ; 50B₁, 50B₂ ; 60B₂,60B₃)opposite one another on the periphery of the insert.

4. The shaft as claimed in anyone of the preceding claims, **characterized in that** the or each inner profile (20B ; 71B, 72B) of the insert (20 ; 70) has an oblong shape.

5. The shaft as claimed in anyone of claims 1 to 3, wherein the or each inner profile (40B ; 50B) of the insert (40 ; 50) has a quadrilateral shape, such as a square, rectangular or rhombus shape.

6. The shaft as claimed in anyone of claims 1 to 3, wherein the or each inner profile (60B) of the insert (60) has a multilobe shape, such as a peanut shape.

7. The shaft as claimed in anyone of preceeding claims, wherein the insert (70) has, in successive cross sections along its length, at least two in each case noncircular inner profiles (71B, 72B) which, when protected onto the same cross-sectional plane, do not coincide with one another.

8. The shaft as claimed in claim 7, wherein said two profiles (71B, 72B) are similar and offset by 90° with respect to one another about the central longitudinal geometric axis (X-X) of the insert (70).

9. The shaft as claimed in anyone of preceeding claims, wherein the outer surface (20A) of the insert (20) is cylindrical with a circular base.

10. The shaft as claimed in claim 9, wherein the tube (10) comprises, lengthwise on each side of its longitudinal portion (12) surrounded by the insert (20), portions (14) having an outer surface (14A) which is cylindrical with a circular base and extends flush with the outer surface (20A) of the insert.

## Patentansprüche

1. Welle (1) zur Übertragung von Bewegungen und/oder Drehkräften, einerseits ein Rohr (10) aus einem Verbundmaterial mit einer Kunststoffmatrix und andererseits einen rohrförmigen metallischen Einsatz (20; 40; 50; 60; 70) umfassend, der fest um einen Längsbereich (12) des Rohrs angeordnet ist und angepasst ist, mechanisch das Rohr und eine mechanische Funktionsanordnung zu verbinden, die von dem Einsatz getragen wird, und beispielhaft eine Achse (2), ein Lager (4), einen Fallenriegel (6) oder Analoges ist,
**dadurch gekennzeichnet,**
**dass** der Einsatz (20; 40; 50; 60; 70) im Querschnitt mindestens ein Innenprofil (20B; 40B; 50B; 60B; 71B, 72B) aufweist, das eine nicht kreisförmige Form hat und an das die Außenfläche (12A) des Längsbereichs (12) des Rohrs (10) in einer im Wesentlichen komplementären Weise angepasst ist.

2. Welle nach Anspruch 1, **dadurch gekennzeichnet, dass** das oder jedes Innenprofil (20B; 40B; 50B; 60B; 71B, 72B) des Einsatzes (20; 40; 50; 60; 70) mindestens ein geradliniges Segment (20B₂; 40B₁, 40B₂; 50B₁, 50B₂; 60B₂, 60B₃) einschließt.

3. Welle nach Anspruch 2, **dadurch gekennzeichnet, dass** das oder jedes Innenprofil (20B; 40B; 50B; 60B; 71B, 72B) des Einsatzes (20; 40; 50; 60; 70) mindestens zwei geradlinige, im Wesentlichen parallele Segmente (20B₂; 40B₁, 40B₂; 50B₁, 50B₂; 60B₂, 60B₃) entgegengesetzt zueinander gemäß dem Umfang des Einsatzes einschließt.

4. Welle nach einem beliebigen der vorhergehenden Ansprüche, **dadurch gekennzeichnet, dass** das oder jedes Innenprofil (20B; 71B, 72B) des Einsatzes (20; 70) eine längliche Form aufweist.

5. Welle nach einem der beliebigen Ansprüche 1 bis 3, **dadurch gekennzeichnet, dass** das oder jedes Innenprofil (40B; 50B) des Einsatzes (40; 50) eine viereckige Form, wie eine quadratische Form, eine rechteckige Form oder eine Rautenform aufweist.

6. Welle nach einem beliebigen der Ansprüche 1 bis 3, **dadurch gekennzeichnet, dass** das oder jedes Innenprofil (60B) des Einsatzes (60) eine mehrkeulige Form, wie eine Erdnussform, aufweist.

7. Welle nach einem beliebigen der vorhergehenden Ansprüche, **dadurch gekennzeichnet, dass** der Einsatz (70) in gemäß seiner Länge aufeinanderfolgenden Querschnittsebenen mindestens zwei Innenprofile (71B, 72B) aufweist, die jeweilige nicht kreisförmige Formen haben, die, projiziert auf eine selbe Querschnittsebene, nicht miteinander übereinstimmen.

8. Welle nach Anspruch 7, **dadurch gekennzeichnet, dass** die zwei Profile (71B, 72B) ähnlich sind und um 90° zueinander um die geometrische zentrale Längsachse (X-X) des Einsatzes (70) versetzt sind.

9. Welle nach einem beliebigen der vorhergehenden Ansprüche, **dadurch gekennzeichnet, dass** die Außenfläche (20A) des Einsatzes (20) zylindrisch mit kreisförmiger Grundfläche ist.

10. Welle nach Anspruch 9, **dadurch gekennzeichnet, dass** das Rohr (10) beidseitig seines von dem Einsatz (20) umgebenen Längsbereich (12) gemäß seiner Länge Bereiche (14) umfasst, die eine zylindrische, mit kreisförmiger Grundfläche und sich bündig zur Außenfläche (20A) des Einsatzes erstreckende Außenfläche (14A) aufweisen.
